(19) Europäisches Patentamt
European Patent Office
Office européen des brevets

(11) **EP 3 045 876 B1**

(12) **EUROPEAN PATENT SPECIFICATION**

(45) Date of publication and mention
of the grant of the patent:
**08.01.2020 Bulletin 2020/02**

(51) Int Cl.:
*G01F 1/66* (2006.01)    *G01P 5/00* (2006.01)

(21) Application number: **13893156.3**

(22) Date of filing: **09.09.2013**

(86) International application number:
**PCT/JP2013/074244**

(87) International publication number:
**WO 2015/033469 (12.03.2015 Gazette 2015/10)**

(54) **FLOW RATE DETECTION APPARATUS AND FLOW RATE DETECTION METHOD**

STRÖMUNGSRATENDETEKTOR UND VERFAHREN ZUR ERKENNUNG DER STRÖMUNGSRATE

APPAREIL ET PROCÉDÉ DE DÉTECTION DE DÉBIT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.07.2016 Bulletin 2016/29**

(73) Proprietor: **Pioneer Corporation
Tokyo 113-0021 (JP)**

(72) Inventor: **TATEISHI, Kiyoshi
Bunkyo-ku, Tokyo 113-0021 (JP)**

(74) Representative: **Viering, Jentschura & Partner
mbB
Patent- und Rechtsanwälte
Am Brauhaus 8
01099 Dresden (DE)**

(56) References cited:
**EP-A1- 1 308 732        EP-A1- 2 837 327
JP-A- H03 247 325        JP-A- 2009 063 570
JP-A- 2009 204 321       JP-A- 2012 520 720
US-A- 3 825 346          US-A- 4 032 259
US-A1- 2007 043 294      US-B1- 6 454 722**

## Description

Technical Field

The present invention relates to a flow velocity detecting apparatus and a flow velocity detecting method in which a velocity of a fluid in a flow passage is detected by irradiating light.

For this type of apparatus, there is known an apparatus configured to use, for example, the Doppler shift to detect the velocity of the fluid. For example, in Patent Literature 1, there is proposed a technology in which Doppler shifted light from the fluid is allowed to resonate in a laser resonator. Moreover, in Patent Literature 2, there is proposed a technology in which a frequency range of a gravity center calculation section is repeatedly corrected in an ultrasonic Doppler measuring device in water. Furthermore, in Patent Literature 3, there is proposed a technology in which a maximum frequency and a minimum frequency are calculated from a Doppler frequency spectrum.

Citation List

Patent Literature

Patent Literature 1: Japanese translation of PCT international application No. 2012-520720
Patent Literature 2: Japanese Patent Application Laid Open No. 2007-292668
Patent Literature 3: Japanese translation of PCT international application No. 2010-522581
Other Patent Literature: US 3,825,346

Summary of Invention

Technical Problem

The aforementioned flow velocity detection that uses the Doppler shift uses, for example, a light intensity signal regarding interference light of light in which the Doppler shift occurs. Specifically, an arithmetic operation is performed by using a power spectrum of the light intensity signal of the interference light, thereby to detect a flow velocity.

Here, in particular, according to studies by the present inventors, it has been found that the power spectrum of the light intensity signal has different power-concentration frequency bands depending on the velocity of the fluid. Specifically, the power spectrum of the light intensity signal concentrates on lower frequencies at lower flow velocities, and the power spectrum of the light intensity signal concentrates on higher frequencies at higher flow velocities.

On the other hand, the power spectrum of the light intensity signal is influenced to no small extent by noise that does not depend on the flow velocity. Thus, if the flow velocity to be detected varies, the variation causes a difference in the influence by the noise on the power spectrum at respective frequencies. Therefore, if the same arithmetic operation method is always used regardless of the flow velocity, an accurate flow velocity cannot be detected, which is technically problematic.

An object of the present invention to be solved includes the above problem as one example. It is therefore an object of the present invention to provide a flow velocity detecting apparatus and a flow velocity detecting method in which information regarding the velocity of the fluid can be preferably detected, by performing an arithmetic operation on the frequency band according to the flow velocity to be detected.

Solution to Problem

The present invention provides a flow velocity detecting apparatus according to claim 1. Further embodiments of the present invention are described in the dependent claims.

Brief Description of Drawings

[FIG. 1] FIG. 1 is a block diagram illustrating an entire configuration of a flow velocity detecting apparatus according to a first example.
[FIG. 2] FIG. 2 is a block diagram illustrating a configuration of a light receiving element and an amplifier according to the first example.
[FIG. 3] FIG. 3 is a block diagram illustrating a configuration of a signal processing unit according to the first example.
[FIG. 4] FIG. 4 is version 1 of a graph illustrating a relation between power of a light intensity signal and a frequency at lower flow velocities and at higher flow velocities.
[FIG. 5] FIG. 5 is a flowchart illustrating an operation of the signal processing unit according to the first example.
[FIG. 6] FIG. 6 is a block diagram illustrating a configuration of a signal processing unit according to a second example.
[FIG. 7] FIG. 7 is version 2 of the graph illustrating the relation between the power of the light intensity signal and the frequency at the lower flow velocities and at the higher flow velocities.
[FIG. 8] FIG. 8 is a graph illustrating a relation between a gain and a frequency in a first BPF and a second BPF.
[FIG. 9] FIG. 9 is a block diagram illustrating an entire configuration of a flow velocity detecting apparatus according to a third example.
[FIG. 10] FIG. 10 is a flowchart illustrating an operation of a signal processing unit according to a fourth example.

[FIG. 11] FIG. 11 is version 3 of the graph illustrating the relation between the power of the light intensity signal and the frequency at the lower flow velocities and at the higher flow velocities.

Description of Embodiment

A first flow velocity detecting apparatus according to an embodiment provide with an irradiating device configured to irradiate a fluid passage and a fluid that flows in the fluid passage with measuring light; a light receiving device configured to receive interference light of the measuring light scattered by the flow passage and the measuring light scattered by the fluid; an obtaining device configured to obtain a specified value of information regarding a velocity of the fluid; a determining device configured to determine a usage frequency range of a signal indicating the interference light, on the basis of the specified value; and an outputting device configured to arithmetically operate the usage frequency range of the signal indicating the interference light and to output the information regarding the velocity of the fluid.

According to the first flow velocity detecting apparatus in the embodiment, in operation thereof, the fluid that flows in the fluid passage, which is, for example, a transparent tube or the like, is irradiated with the measuring light by the irradiating device. The irradiating device includes, for example, a light emitting diode, and when used, the irradiating device is provided at a position at which the measuring light can be efficiently irradiated.

The measuring light irradiated from the irradiating device is scattered by each of the fluid passage and the fluid. Then, the light receiving device receives the interference light of the measuring light scattered by the flow passage and the measuring light scattered by the fluid. The light receiving device includes, for example, a photodiode or the like, and when used, the light receiving device is provided, for example, at a position opposite to the irradiating device, as viewed from the fluid passage and the fluid.

While the interference light is received by the light receiving device, the specified value of the information regarding the velocity of the fluid is obtained by the obtaining device. The "information regarding the velocity of the fluid" is a broad concept including various information (e.g. a flow amount, etc.) obtained by using the velocity of the fluid, in addition to a value itself of the velocity of the fluid. Moreover, the "specified value" is a value set as a reference of the velocity of the fluid, and is, for example, a value corresponding to a flow velocity command inputted from the exterior, or the like.

If the specified value is obtained, the usage frequency range of the signal indicating the interference light is determined by the determining device on the basis of the specified value. The "usage frequency range" determines a range of frequencies used for an arithmetic operation of the outputting device described later, and is determined according to magnitude of the obtained specified value. For example, the usage frequency range is determined to be broader, as the specified value increases.

If the usage frequency range is determined, the usage frequency range of the signal indicating the interference light is arithmetically operated, and the information regarding the velocity of the fluid is outputted by the outputting device. In other words, the outputting device arithmetically operates the information regarding the velocity of the fluid, by using only information in the usage frequency range, with respect to the signal indicating the interference light obtained from the light receiving device. To put it differently, the information regarding the velocity of the fluid is arithmetically operated, except information out of the usage frequency range.

Here, in particular, according to the studies by the present inventors, it has been found that the power spectrum of the signal indicating the interference light has different power-concentration frequency bands depending on the velocity of the fluid. Specifically, the power spectrum of the signal indicating the interference light concentrates on lower frequencies at lower flow velocities, and the power spectrum of the light intensity signal concentrates on higher frequencies at higher flow velocities.

On the other hand, the power spectrum of the signal indicating the interference light is influenced to no small extent by noise that does not depend on the flow velocity. Thus, if the flow velocity to be detected varies, the variation causes a difference in the influence by the noise on the power spectrum at respective frequencies. Therefore, if the same arithmetic operation method is always used regardless of the flow velocity, there is a possibility that an accurate flow velocity cannot be detected.

In the embodiment, however, as described above, the usage frequency range of the signal indicating the interference light is determined on the basis of the specified value of the information regarding the velocity of the fluid (in other words, an estimated value of the information regarding the velocity of the fluid to be detected). It is thus possible to arithmetically operate the information regarding the velocity of the fluid, by using an appropriate frequency range that takes into account the influence by the noise.

As explained above, according to the first fluid velocity detecting apparatus in the embodiment, it is possible to accurately detect the information regarding the velocity of the fluid.

In one aspect of the first flow velocity detecting apparatus according to the embodiment, further comprising a driving device configured to perform an operation of flowing the fluid in the fluid passage according to the specified value.

According to this aspect, the driving device, which is configured, for example, as a rotation pump or the like, operates according to the specified value, and as a result, the fluid flows in the fluid passage. Thus, if the usage frequency range is determined on the basis of the obtained specified value, it is possible to accurately detect the information regarding the velocity of the fluid in the appropriate frequency range.

In the aforementioned aspect in which the driving device is provided, wherein said obtaining device arithmetically operates and obtains the specified value from a drive amount of said driving device.

In this case, since the specified value is arithmetically operated from the drive amount of the driving device, a more appropriate specified value can be obtained in comparison with a case where the specified value is directly obtained. In other words, since the specified value is arithmetically operated according to the drive amount actually realized on the driving device, the specified value that is appropriate to determine the usage frequency range can be obtained. By this, the usage frequency range can be preferably determined even if there is a difference between the drive amount estimated from the specified value and the actual drive amount.

In the aforementioned aspect in which the specified value is obtained from the drive amount of the driving device, wherein said driving device has a number-of-revolutions detecting device configured to detect a rotation pump and a number of revolutions of the rotation pump, and said obtaining device arithmetically operates the specified value on the basis of the number of revolutions detected by the number-of-revolutions detecting device.

In this case, the number of revolutions of the rotation pump is detected as the drive amount of the driving device, which is used to arithmetically operate the specified value. By virtue of this configuration, the drive amount of the driving device can be detected in a relatively simple configuration and with high accuracy. It is therefore possible to arithmetically operate the specified value, more preferably, and to determine the appropriate usage frequency range.

A second flow velocity detecting apparatus according to an example not part of the present invention is provided with an irradiating device configured to irradiate a fluid passage and a fluid that flows in the fluid passage with measuring light; a light receiving device configured to receive interference light of the measuring light scattered by the flow passage and the measuring light scattered by the fluid; a second determining device configured to determine a frequency range in which a slope of a spectrum of a signal indicating the interference light with respect to frequency is less than or equal to a predetermined threshold value, to be a usage frequency range of the signal indicating the interference light; and an outputting device configured to arithmetically operate the usage frequency range of the signal indicating the interference light and to output information regarding a velocity of the fluid.

According to the second flow velocity detecting apparatus in the example not part of the present invention, in operation thereof, the fluid that flows in the fluid passage, which is, for example, a transparent tube or the like, is irradiated with the measuring light by the irradiating device. The irradiating device includes, for example, a light emitting diode, and when used, the irradiating device is provided at a position at which the measuring light can be efficiently irradiated.

The measuring light irradiated from the irradiating device is scattered by each of the fluid passage and the fluid. Then, the light receiving device receives the interference light of the measuring light scattered by the flow passage and the measuring light scattered by the fluid. The light receiving device includes, for example, a photodiode or the like, and when used, the light receiving device is provided, for example, at a position opposite to the irradiating device, as viewed from the fluid passage and the fluid.

If the interference light is received by the light receiving device, the slope of the spectrum of the signal indicating the interference light with respect to the frequency is obtained by the second determining device, and is compared with the predetermined threshold value. Here, the "predetermined threshold value" is a threshold value for determining the usage frequency range, and is obtained and set theoretically, experimentally, or experientially in advance, on the basis of a ratio of the noise to the spectrum of the signal indicating the interference light. For example, the predetermined threshold value is set as a value from which it can be determined whether the influence by the noise on the signal indicating the interference light is small enough to arithmetically operate the information regarding the velocity of the fluid, accurately, or is large enough not to arithmetically operate the information regarding the velocity of the fluid, correctly.

Then, on the second determining device, the frequency range in which the slope of the spectrum of the signal indicating the interference light is less than or equal to the predetermined threshold value is determined to be the usage frequency range of the signal indicating the interference light. In other words, a frequency at which the slope of the spectrum of the signal indicating the interference light is equal to the predetermined threshold is determined to be a usage frequency upper limit value.

If the usage frequency range is determined, the usage frequency range of the signal indicating the interference light is arithmetically operated, and the information regarding the velocity of the fluid is outputted by the outputting device. In other words, the outputting device arithmetically operates the information regarding the velocity of the fluid, by using only the information in the usage frequency range, with respect to the signal indicating the interference light obtained from the light receiving device. To put it differently, the information regarding the velocity of the fluid is arithmetically operated, except the information out of the usage frequency range.

As explained above, according to the second fluid velocity detecting apparatus in the example not part of the present invention, the usage frequency range is determined from the signal indicating the interference light, and the information regarding the velocity of the fluid is arithmetically operated. Thus, for example, even if the specified value such as a flow velocity command cannot be obtained, it is possible to arithmetically operate the information regarding the velocity of the information, by using the appropriate frequency range that takes into account the influence by the noise. It is therefore possible to accurately detect the information regarding the velocity of the fluid.

In another aspect of the first or second flow velocity detecting apparatus according to the example not part of the present invention, wherein said outputting device has a FFT device configured to perform fast Fourier transform on the signal indicating the interference light.

According to this aspect, the fast Fourier transform (FFT) can be performed on the signal indicating the interference light. It is thus possible to preferably arithmetically operate the information regarding the velocity of the fluid by using the signal indicating the interference light. The FFT device may have an A/D converting device configured to perform A/D conversion on the signal indicating the interference light outputted from the light receiving device.

In another aspect of the first or second flow velocity detecting apparatus according to the embodiment of the present invention and the example not part of the present invention, wherein said outputting device has a filtering device configured to allow only the usage frequency range of the signal indicating the interference light to pass there the filtering device.

According to this aspect, a signal out of the usage frequency range out of the signal indicating the interference light is cut by the filtering device. It is therefore possible to preferably perform the arithmetic operation in the usage frequency range of the signal indicating the interference light.

In the filtering device, a filter has a variable gain according to the usage frequency range. Alternatively, a plurality of filtering devices having different gains may be prepared, and a filter according to the usage frequency range may be selected from the filtering devices.

In another aspect of the first or second flow velocity detecting apparatus according to the embodiment of the present invention and the example not part of the present invention, wherein said outputting device has an A/D converting device configured to A/D-convert the signal indicating the interference light, and a clock generating device configured to generate a sampling clock of the A/D converting device, and the clock generating device changes frequency of the sampling clock according to the usage frequency range.

According to this aspect, the signal indicating the interference light is A/D converted by the A/D converting device. Then, the sampling clock of the A/D converting device is generated by the clock generating device.

Here, in particular, the clock generating device is configured to change the frequency of the sampling clock. Specifically, the clock generating device changes the frequency of the sampling clock according to the determined usage frequency range. For example, if the fluid has a low flow velocity, the usage frequency range is determined to be relatively narrow, arid the frequency of the sampling clock is set to be low according to the determined usage frequency range. On the other hand, if the fluid has a high flow velocity, the usage frequency range is determined to be relatively broad, and the frequency of the sampling clock is set to be high according to the determined usage frequency range.

If the frequency of the sampling clock is appropriately changed as described above, it is possible to increase frequency resolution without increasing the number of FFT points, for example, at the lower flow velocities. Moreover, it is possible to preferably expand a frequency band that can be arithmetically operated. It is also possible to increase the number of FFT points to increase the frequency resolution at the lower flow velocities, and to reduce the number of FFT points to avoid the saturation of a processing time at the higher flow velocities.

In another aspect of the first or second flow velocity detecting apparatus according to the embodiment of the present invention and the example not part of the present invention, wherein said light receiving device includes a plurality of light receiving elements, subtracts respective detection currents of the plurality of light receiving elements, and outputs a subtraction result as the signal indicating the interference light.

According to this aspect, the interference light is received by each of the plurality of light receiving elements. Then, the detection currents of the respective light receiving elements are subtracted from each other, and the subtraction result is outputted as the signal indicating the interference light (specifically, a signal indicating intensity of the interference light). The use of differential detection by the plurality of light receiving elements as described above can improve an S/N ratio of the signal indicating the interference light.

In another aspect of the first or second flow velocity detecting apparatus according to the embodiment of the present invention and the example not part of the present invention, wherein the fluid passage is an exchangeable transparent tube.

According to this aspect, the fluid passage is configured as the exchangeable transparent tube, and is used while being replaced from another transparent tube, as occasion demands. The term "transparent" herein does not necessarily mean that the irradiated light is completely transmitted, but may mean that transparency is realized to the extent that scattered light in the fluid that flows in the tube can be detected.

If the measurement is performed while the transparent tube is replaced, measurement conditions vary due to product variations of the transparent tube. Therefore, for example, if a measurement method that requires high accuracy in a focal position of an optical system is used, measurement stability is hardly ensured. In this case, in order to ensure the stability, there is required a way to connect a container for which an exclusive optical design is provided, with a tube, or similar ways, which increases an apparatus cost.

In this aspect, however, a measurement method using the interference light between the scattered light in the fluid passage and the scattered light in the fluid (i.e. laser Doppler flowmetery: LDF) is adopted, and thus, a degree of allowance of optical variations is higher than the aforementioned measurement method. Therefore, an expensive member is not necessarily used to ensure the measurement stability, and as a result, the cost increase can be suppressed.

A first flow velocity method according to an embodiment provide with an irradiating process of irradiating a fluid passage and a fluid that flows in the fluid passage with measuring light; a light receiving process of receiving interference light of the measuring light scattered by the flow passage and the measuring light scattered by the fluid; an obtaining process of obtaining a specified value of information regarding a velocity of the fluid; a determining process of determining a usage frequency range of a signal indicating the interference light, on the basis of the specified value; and an outputting process of arithmetically operating the usage frequency range of the signal indicating the interference light and of outputting the information regarding the velocity of the fluid.

According to the first flow velocity method according to the embodiment, as in the first flow velocity apparatus according to the embodiment described above, it is possible to arithmetically operate the information regarding the velocity of the information, by using the appropriate frequency range that takes into account the influence by the noise. It is therefore possible to accurately detect the information regarding the velocity of the fluid.

Even the first flow velocity method according to the embodiment can adopt the same various aspects as those of the first flow velocity apparatus according to the embodiment described above.

A second flow velocity method according to an example not part of the present invention provides with an irradiating process of irradiating a fluid passage and a fluid that flows in the fluid passage with measuring light; a light receiving process of receiving interference light of the measuring light scattered by the flow passage and the measuring light scattered by the fluid; a second determining process of determining a frequency range in which a slope of a spectrum of a signal indicating the interference light with respect to frequency is less than or equal to a predetermined threshold value, to be a usage frequency range of the signal indicating the interference light; and an outputting process of arithmetically operating the usage frequency range of the signal indicating the interference light and of outputting information regarding a velocity of the fluid.

According to the second flow velocity method according to the example not part of the present invention, as in the second flow velocity apparatus according to the example not part of the present invention, described above, it is possible to arithmetically operate the information regarding the velocity of the information, by using the appropriate frequency range that takes into account the influence by the noise. It is therefore possible to accurately detect the information regarding the velocity of the fluid.

Even the second flow velocity method according to the example not part of the present invention, can adopt the same various aspects as those of the second flow velocity apparatus according to the example not part of the present invention described above.

The operation and other advantages of the flow velocity detecting apparatus and the flow velocity detecting method according to the embodiments will be explained in more detail in examples below.

Examples

Hereinafter, with reference to the drawings, a flow velocity detecting apparatus and a flow velocity detecting method according to examples will be explained in detail.

<First Example>

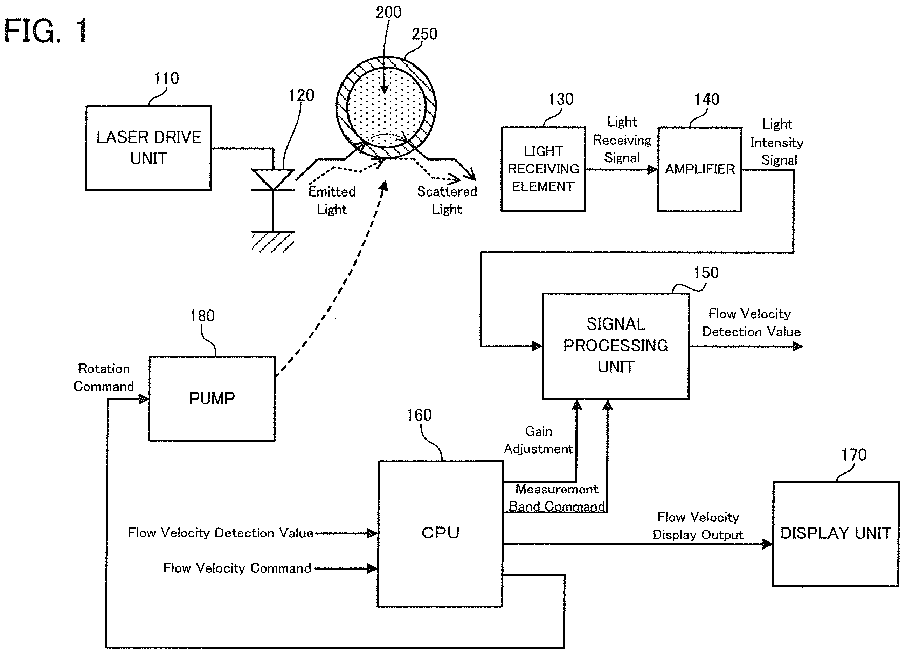

A flow velocity detecting apparatus according to a first example will be explained with reference to FIG. 1 to FIG. 5.

<Entire Configuration>

Firstly, an entire configuration of the flow velocity detecting apparatus according to the first example will be explained with reference to FIG. 1. FIG. 1 is a block diagram illustrating the entire configuration of the flow velocity detecting apparatus according to the first example.

In FIG. 1, the flow velocity detecting apparatus according to the example is provided with a laser drive unit 110, a semiconductor laser 120, a light receiving element 130, an amplifier 140, a signal processing unit 150, a CPU 160, a display unit 170, and a pump 180.

The laser drive unit 110 generates a current for driving the semiconductor laser 120.

The semiconductor laser 120 is one specific example of the "irradiating device", and irradiates a transparent tube 250 in which a fluid 200 as a measurement target flows, with laser light according to a drive current generated by the laser drive unit 110.

The light receiving element 130 is one specific example of the "light receiving device", and is positioned, for example, in such a manner that the transparent tube 250 is between the light receiving element 130 and the semiconductor laser 120. The light receiving element 130 receives interference light of light scattered by the fluid 200 and light scattered by the transparent tube 250, out of the laser light irradiated from the semiconductor laser 120.

The amplifier 140 converts a detection current, which is detected by the light receiving element 130, to voltage, and outputs it as a light intensity signal.

The signal processing unit 150 is one specific example of the "outputting device", and arithmetically operates and outputs a flow velocity of the fluid 200 from the light intensity signal. A specific configuration and operation of the signal processing unit 150 will be detailed later.

The central processing unit (CPU) 160 is configured as a controller that integrally controls the entire apparatus, and can output various commands to each of parts that constitute the apparatus. In particular, a flow velocity command for specifying the velocity of the fluid 200 is inputted from the exterior to the CPU 160 according to the example. In other words, the CPU 160 functions as one specific example of the "obtaining device". The CPU 160 that has obtained the flow velocity command outputs a rotation command according to the flow velocity command, to the pump 180. The flow velocity command is used not only for the rotation command to the pump 180, but also for an arithmetic operation of the flow velocity described later.

The display unit 170 is configured as a display, such as, for example, a liquid crystal monitor, and displays the arithmetically operated flow velocity according to a command from the CPU 160.

The pump 180 is configured, for example, as a tubing pump that quantitatively transfers the fluid, continuously and regularly, by a roller rotation action of a pump head, which is accompanied by a rotating shaft and which includes a motor and a gear, by using elasticity of the transparent tube 250.

<Configuration of Light Receiving Element>

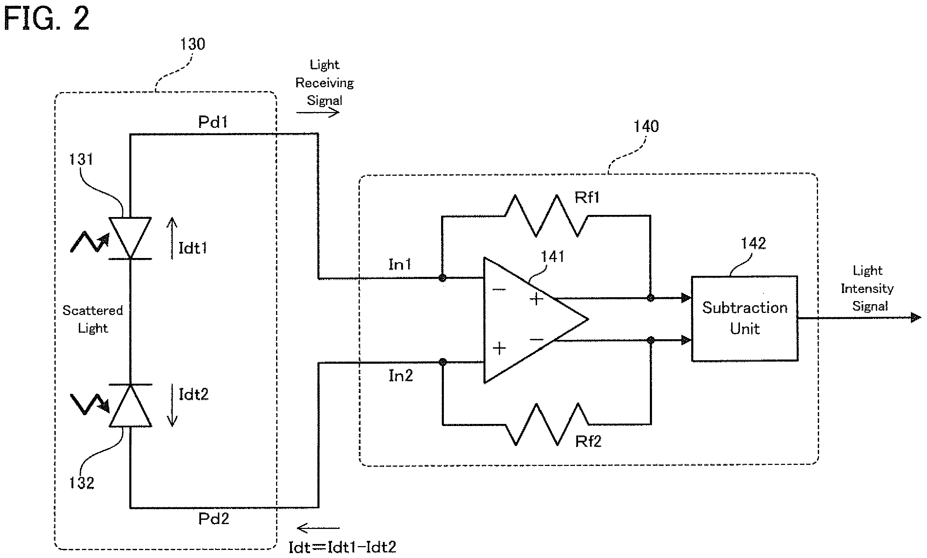

Next, a configuration of the light receiving element 130 according to the first example will be explained with reference to FIG. 2. FIG. 2 is a block diagram illustrating the configuration of the light receiving element and the amplifier according to the first example.

In FIG. 2, the light receiving element 130 according to the first example is provided with two light receiving elements, which are a first light receiving element 131 and a second light receiving element 132. In particular, the first light receiving element 131 and the second light receiving element 132 are connected to have a reverse polarity with respect to a current/voltage converter 141 of the amplifier 140. Output from the current/voltage converter 141 is subtracted on a subtraction unit 142, and a subtraction result is outputted as the light intensity signal.

According to the aforementioned configuration, out of light signals received by the respective light receiving elements, regarding light signals that correlate less with each other (e.g. signal components having different amplitude and phases), the respective detection currents are amplified and outputted. On the other hand, regarding light signals that significantly correlate with each other (e.g. signal components having the same amplitude and phase), the respective detection currents cancel out each other, and the detection currents from the respective light receiving elements are suppressed. As a result, the light intensity signal outputted from the amplifier 140 is a signal obtained by amplifying uncorrelated components out of the light signals received by the respective light receiving elements, and is a signal in which the signal components that significantly correlate with each other (e.g. DC light, etc.) are suppressed. In other words, it can be said that the light receiving element 130 and the amplifier 140 according to the example constitute an uncorrelated signal detector.

Regarding a path of light that enters the first light receiving element 131 and the second light receiving element 132, it can be said that there is no light that passes through the same light path, in order of light wavelength, because the first light receiving element 131 and the second light receiving element 132 are provided at different positions. On the other hand, a light beat signal generated by interference between Doppler shifted light from a mobile body (i.e. the fluid 200) and reflected light from a fixed object (e.g. the transparent tube 250) uses light interference, and it thus can be said that the light beat signal generated by the interference does not correlate with a light beat signal that is a light signal component detected by the first light receiving element 131 and the second light receiving element 132. This is because there is an extremely low possibility that the paths of the lights that generate the beat signal match in order of light wavelength. As a result, due to subtraction performed by the reverse-polarity connection of the first light receiving element 131 and the second light receiving element 132, a DC component is suppressed, and the beat signal that is the signal component becomes $\sqrt{2}$ times.

In FIG. 2, if the first light receiving element 131 and the second light receiving element 132 are configured to have the same light receiving area and to be evenly irradiated with DC light components, the DC light components cancel out each other and are not outputted. It is therefore possible to avoid saturation of the amplifier 140 caused by the DC components and to efficiently amplify an AC component, which is a signal component. Specifically, current/voltage conversion resistors Rf1 and Rf2 can be designed to have a large resistance value, and thus, a high S/N ratio is allowed by improving conversion sensitivity. Moreover, in a case of a so-called divided detector in which the first light receiving element 131 and the second light receiving element 132 are configured on the same silicon, a characteristic change due to a temperature change, such as, for example, a change in dark current due to an increase in input offset voltage of the amplifier 140, causes in-phase noises, which cancel out each other and are not outputted, as in the DC light components.

Moreover, a noise component included in a light source, which is a source of an input light amount, such as, for example, a noise component included in the laser light, is an in-phase component as in the DC light. For example, a fluctuation of an input light amount by mode hop noise of the semiconductor laser occurs at the same time point with respect to the first light receiving element 131 and the second light receiving element, and is in-phase noise. Fluctuation components of detection currents caused by the mode hop noise in respective detection currents Id1 and Id2 significantly correlate with each other. Therefore, the in-phase components cancel out each other, and thus, the noise caused by the fluctuation of the light source is suppressed, and the S/N ratio in the signal detection is improved, which is preferable.

As described above, in the example, the beat signal can be detected with the high S/N ratio even in the LDF that does not use a special optical system having low optical sensitivity.

<Configuration of Signal Processing Unit>

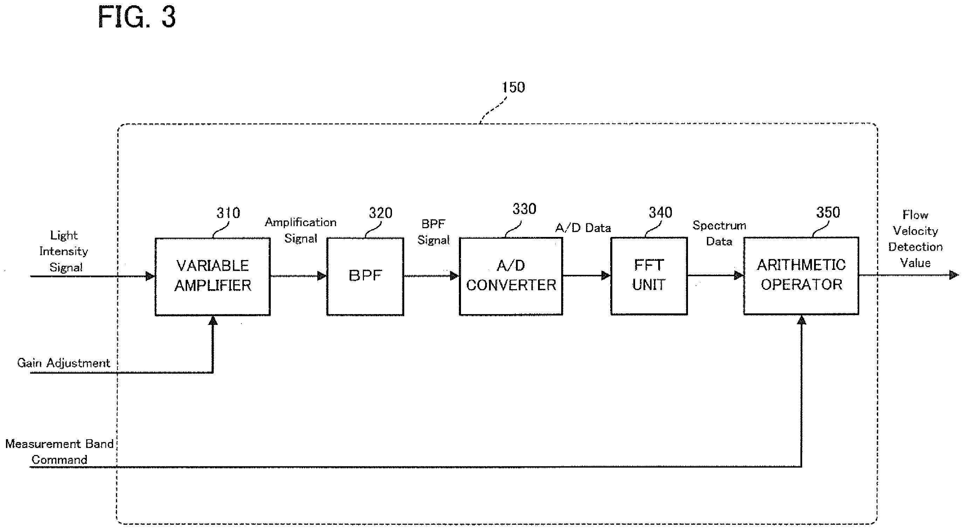

Next, a specific configuration of the signal processing unit 150 according to the first example will be explained with reference to FIG. 3. FIG. 3 is a block diagram illustrating the configuration of the signal processing unit according to the first example.

In FIG. 3, the signal processing unit 150 according to the first example is provided with a variable amplifier 310, a band-pass filter (BPF) 320, an A/D converter 330, a FFT unit 340, and an arithmetic operator 350.

The variable amplifier 310 amplifies the light intensity signal inputted from the amplifier 140 in accordance with a gain adjustment value commanded by the CPU 160, and outputs it as an amplified signal. The amplified signal is outputted to the BPF 320.

The BPF 320 is one specific example of the "filtering device", removes a high-frequency component and a low-frequency component, which are noise components of the inputted amplified signal, and outputs a residual signal as a BFP signal. The BPF signal is outputted to the A/D converter 330.

The A/D converter 330 is one specific example of the "A/D converting device", digitizes the BPF signal, which is an analog signal, and outputs the digitized signal to the FFT unit 340 as A/D data.

The FFT unit 340 is one specific example of the "FFT device", analyzes the frequency of the A/D data by using fast Fourier transform, and outputs an analysis result to the arithmetic operator 350 as spectrum data.

The arithmetic operator 350 determines an arithmetic range of the spectrum data according to a measurement band command inputted from the CPU, and arithmetically operates the velocity of the fluid 200 in accordance with the arithmetic range. An arithmetic result by the arithmetic operator 350 is outputted to the CPU 160 as a flow velocity detection value.

<Appropriate Measurement Band>

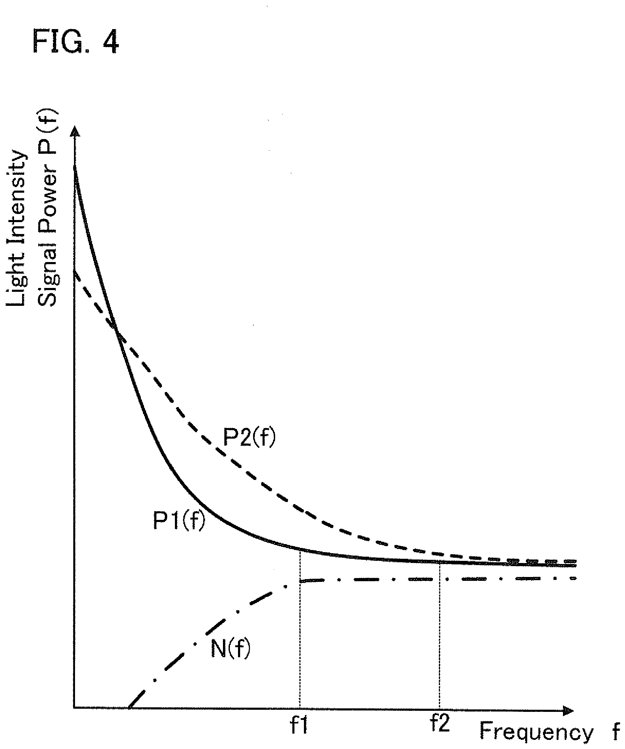

Now, the measurement band considered in the arithmetic operation of the flow velocity will be explained with reference to FIG. 4 in addition to FIG. 1 described above. FIG. 4 is version 1 of a graph illustrating a relation between power of the light intensity signal and a frequency at lower flow velocities and at higher flow velocities.

In FIG. 1, an outer wall of the transparent tube 250 is fixed and does not move. On the other hand, a scattered body in the fluid 200 that flows in the transparent tube 250 moves by a pump action and has a flow velocity. A part of the laser light emitted from the semiconductor laser 120 is scattered by the moving scattered body, becomes scattered light with the Doppler shift generated, and enters the light receiving element 130 (in a solid line). On the other hand, another part of the laser light emitted from the semiconductor laser 120 is reflected in the outer wall part of the transparent tube 250, which is a fixed part, and enters the light receiving element 130 (in a dashed line). Both the light beams interfere with each other, become the light beam signal, and enter the light receiving element 130. A power spectrum of the light beat signal varies depending on a moving velocity of the scattered body.

Specifically, as illustrated in FIG. 4, a power spectrum P1(f) (in a solid line) of the light intensity signal at lower flow velocities in which the moving velocity is low concentrates on lower frequencies. On the other hand, a power spectrum P2(f) (in a dashed line) of the light intensity signal at higher flow velocities in which the moving velocity is high concentrates on higher frequencies. FIG. 4 further illustrates a power spectrum of the light intensity signal when laser irradiation is stopped, as a noise spectrum N(f), in an alternate long and short dash line. A main cause of the noise is the noise generated by the current/voltage converter 141 (refer to FIG. 2), and increases if the frequency f increases. This is because the noise generated by the current/voltage converter 141 is differentiated by an electrostatic capacity between terminals of the light receiving element 130 and by an input electrostatic capacity of the current/voltage converter.

Here, as is clear from FIG. 4, the power spectrum of the light intensity signal provides P1(f)>P2(f) in a lower frequency area, and provides P2(f)>P1(f) in a higher frequency area. P1(f) is significantly influenced by the noise component N(f) in an area whose frequency is greater than or equal to f1 at the lower flow velocities. Specifically, power of the power spectrum P1(f) at the lower flow velocities concentrates on the lower frequency area, and originally, the power should gradually decrease in a higher frequency area whose frequency is greater than or equal to f1. On the other hand, power of the noise N(f) is high in the higher frequency area whose frequency is greater than or equal to f1. As a result, not the original characteristic but the characteristic of N(f) dominates the characteristic of P1(f) in the higher frequency area whose frequency is greater than or equal to f1.

If the frequency area in which the noise N(f) dominates the characteristic is used, measurement errors increase. This is because not the original signal characteristic but a noise spectrum is mainly used for the measurement.

On the other hand, P2(f) is significantly influenced by the noise component N(f) in an area whose frequency is greater than or equal to f2 at the higher flow velocities; however, the influence by the noise N(f) is small at the frequency f1, unlike at the lower flow velocities. This is because the power of the light intensity signal at the higher flow velocities concentrates on higher frequencies in comparison with at the lower flow velocities. Thus, at the frequency f1 (<f2), the signal power of P2(f) is sufficiently higher than the power of the noise N(f), and is not dominated by the noise N(f).

As a result, it is clear that the appropriate measurement band at the lower flow velocities is a band whose frequency is less than f1, and that it is better not to use the frequency area whose frequency is greater than or equal to f1 for the arithmetic operation of the flow velocity. In the same manner, the appropriate measurement band at the higher flow velocities is a band whose frequency is less than f2, and it is better not to use a frequency area whose frequency is greater than or equal to f2 for the arithmetic operation of the flow velocity. Unlike at the lower flow velocities, however, it is better to use a frequency area with a range of f1 to f2 for the arithmetic operation of the flow velocity. This is because if the frequency area whose frequency is greater than or equal to f1 is not used for the arithmetic operation of the flow velocity at the higher flow velocities in the same manner as at the lower flow velocities, the original signal component is partially removed, which increases the measurement errors.

As described above, the appropriate measurement band is different between at the lower flow velocities and at the higher flow velocities. Specifically, an appropriate measurement band upper limit f1 at the lower flow velocities is lower than an appropriate measurement band upper limit f2 at the higher flow velocities.

In the example, the appropriate measurement band is set at, but not necessarily limited to, two stages, which are at the lower flow velocities and at the higher flow velocities. Specifically, the appropriate measurement band may be set at three stages, which are at higher flow velocities, at middle flow velocities, and at lower flow velocities, or the appropriate measurement band may be set at more stages.

<Flow velocity Arithmetic Process>

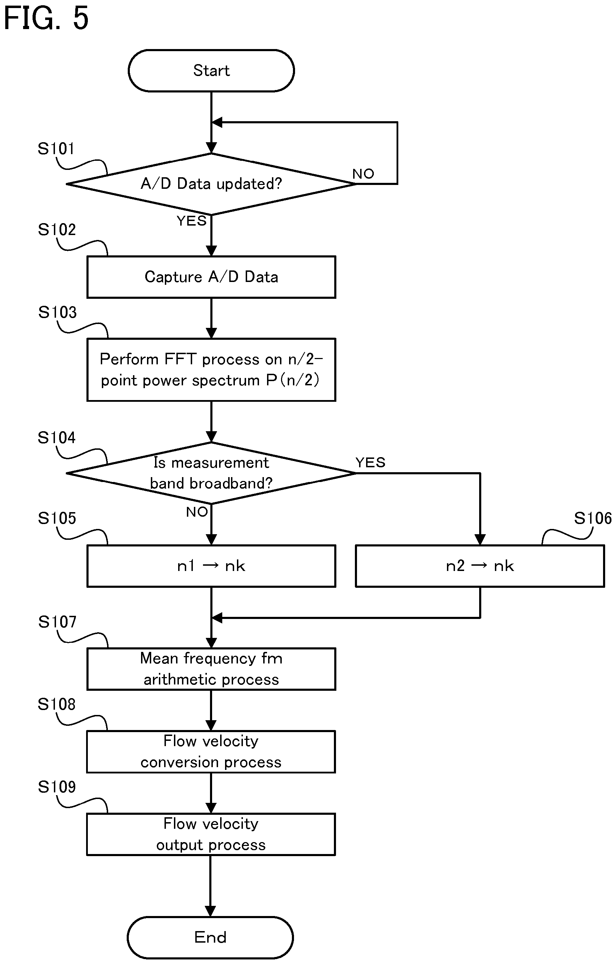

Next, a flow velocity arithmetic process by the flow velocity detecting apparatus according to the first example will be explained with reference to FIG. 5. FIG. 5 is a flowchart illustrating an operation of the signal processing unit according to the first example.

In FIG. 5, on the signal processing unit 150 that is to perform the flow velocity arithmetic operation, it is firstly determined whether or not the A/D data is updated on the A/D converter 330 (step 101). If it is determined that the A/D data is updated (the step S101: YES), capture of the A/D data is performed (step S102).

If the A/D data is obtained, n-point A/D data is used to perform the FFT so that an n/2-point power spectrum P(n/2) is obtained on the FFT unit 340 (step S103). If the spectrum data is obtained, a measurement band command value from the CPU 160 is confirmed. Specifically, it is determined whether or not the measurement band is broadband (step S104).

The measurement band is set to be the band whose frequency is less than f1 at the lower flow velocities and the band whose frequency is less than f2 at the higher flow velocities, as explained by using FIG. 4. The CPU 160 according to the example particularly determines the measurement band according to the inputted flow velocity command.

Here, if it is determined that the measurement band is not broadband (i.e. is narrowband) (the step S104: NO), n1 is set to be nk, which indicates an arithmetic range upper limit (step S105). On the other hand, if it is determined that the measurement band is broadband (the step S104: YES), n2 is set to be nk (step S106). Here, "n1" and "n2" are respectively values corresponding to "f1" and "f2", and a relation of n1<n2≦n/2 is satisfied. Moreover, regarding f1 and f2, a relation of f1<f2≦fs/2 is satisfied. "n1" and "n2" are specifically selected as numeral numbers that satisfy the following equations (1) and (2).

$$n1 = n \cdot f1/fs \cdots (1)$$

$$n2 = n \cdot f2/fs \cdots (2)$$

Here, "fs" is a sampling frequency of the A/D converter 330.

If nk is set, a mean frequency fm indicating a gravity center position of the power spectrum P(n/2) is arithmetically operated in a range of k=1 to nk (step S107). The mean frequency fm can be obtained by using the following equation (3).

$$fm = \Sigma k \cdot P(k)/\Sigma P(k) \cdots (3)$$

Then, the mean frequency fm is multiplied by a flow velocity conversion factor to obtain the flow velocity (step S108). If the flow velocity is obtained, a flow velocity value is converted to a signal corresponding to the display unit 170 and is outputted (step S109). By this, a series of processes on the flow velocity detecting apparatus is ended.

As explained above, according to the flow velocity detecting apparatus in the example, the appropriate measurement band is determined on the basis of the flow velocity command, and the flow velocity is arithmetically operated by the arithmetic operation in the arithmetic range according to the appropriate measurement band. By this, the velocity of the fluid is arithmetically operated in an appropriate frequency range that takes into account the influence by the noise. It is therefore possible to accurately detect the flow velocity.

The flow velocity detecting apparatus according to the example may be configured to detect not only the flow velocity but also another parameter that is obtained from the flow velocity (e.g. a flow amount, etc.).

<Second Example>

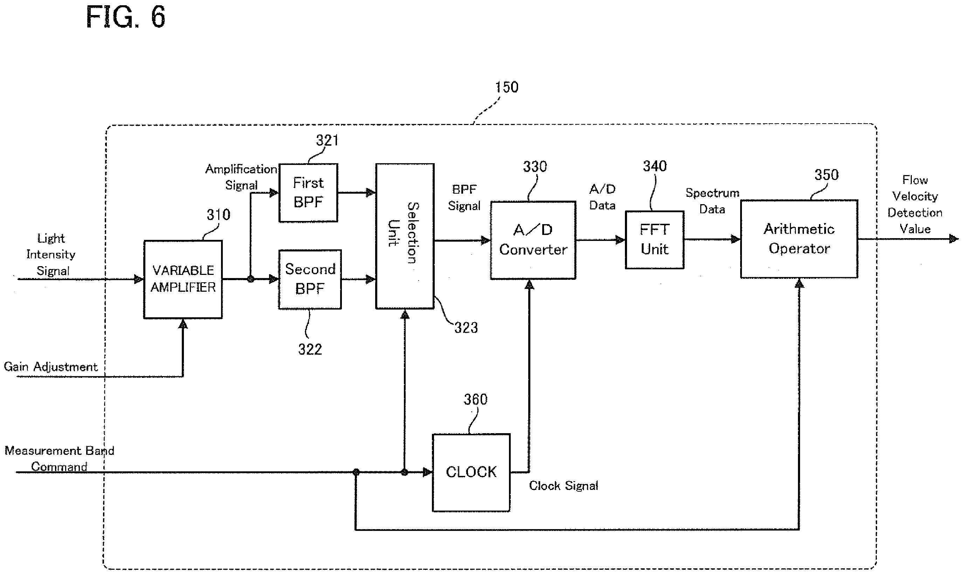

Next, a flow velocity detecting apparatus according to a second example will be explained with reference to FIG. 6 to FIG. 8. The second example has a partially different configuration and operation, in comparison with the first example described above, and is mostly the same as the first example. Thus, hereinafter, the different part from the first example will be explained in detail, and an explanation of the same part will be omitted, as occasion demands.

<Configuration of Signal Processing Unit>

Firstly, a configuration of a signal processing unit according to the second example will be explained with reference to FIG. 6. FIG. 6 is a block diagram illustrating the configuration of the signal processing unit according to the second example.

In FIG. 6, a signal processing unit 150 according to the second example is provided with a variable amplifier 310, a first BPF 321, a second BPF 322, a selection unit 323, an A/D converter 330, a FFT unit 340, an arithmetic operator 350, and a clock generation unit 360, In other words, the signal processing unit 150 according to the second example is provided with the first BPF 321, the second BPF 322, and the selection unit 323, instead of the BPF 320 of the signal processing unit 150 according to the first example (refer to FIG. 3). In addition, the clock generation unit 360 is provided,

Each of the first BPF 321 and the second BPF 322 removes a high-frequency component and a low-frequency component, which are noise components of an amplified signal inputted from the variable amplifier 310, and outputs a residual signal as a BFP signal. The first BPF 321 and the second BPF 322 are set to have passbands that are different from each other.

The selection unit 323 selectively outputs one of the two BPF signals inputted from the first BPF 321 and the second BPF 322. Which BPF signal to output is determined by the measurement band command inputted from the CPU 160. In other words, which BPF signal to be outputted is determined on the basis of the flow velocity command.

The clock generation unit 360 is one example of the "clock generating device", and changes a sampling clock of the A/D converter 330 according to the measurement band command inputted form the CPU 160. In other words, the clock generation unit 360 is configured to generate the sampling clock according to the flow velocity command.

<Operation in Arithmetic Operation of Flow Velocity>

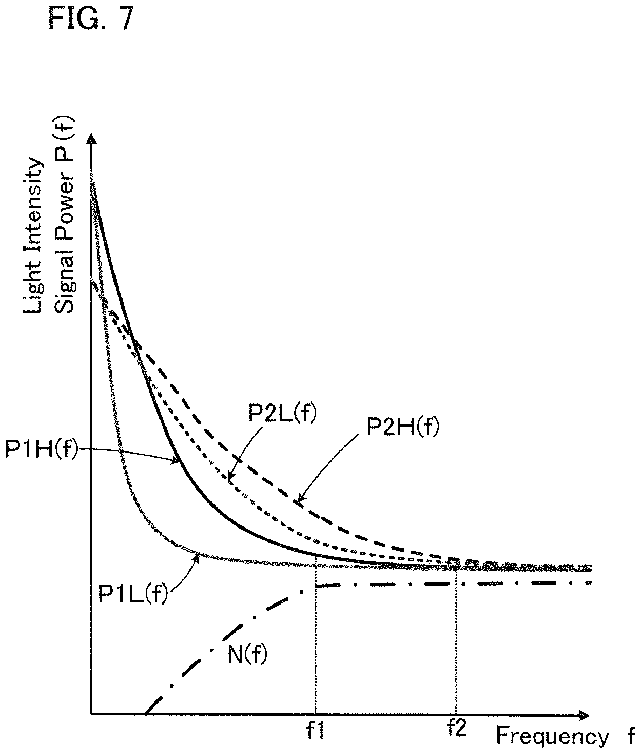

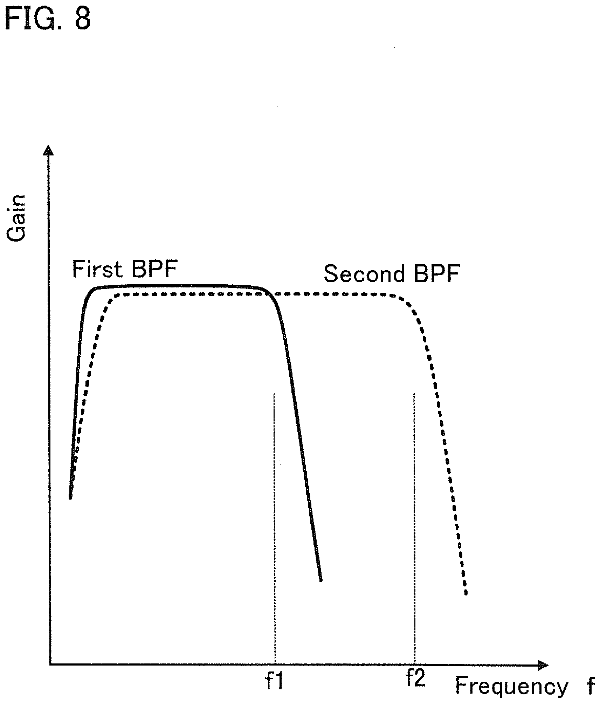

Next, an operation in the arithmetic operation of the flow velocity on the flow velocity detecting apparatus according to the second example will be explained with reference to FIG. 7 and FIG. 8. FIG. 7 is version 2 of the graph illustrating the relation between the power of the light intensity signal and the frequency at the lower flow velocities and at the higher flow velocities. FIG. 8 is a graph illustrating a relation between a gain and a frequency in the first BPF and the second BPF.

In FIG. 7, the power spectrum of the light intensity signal at the lower flow velocities changes from P1L(f) to P1H(f) due to an increase in the flow velocity. Thus, as is derived from the drawing, the upper limit of the appropriate measurement band at the lower flow velocities is f1. In the same manner, the power spectrum of the light intensity signal at the higher flow velocities changes from P2L(f) to P2H(f) due to an increase in the flow velocity. Thus, the upper limit of the appropriate measurement band at the higher flow velocities is f2.

In FIG. 8, a gain characteristic of the first BPF 321 is set to be high in the band whose frequency is less than f1. In other words, a passband having the frequency f1 as an upper limit is set. Thus, at the lower flow velocities in which the upper limit of the appropriate measurement band is f1, the selection unit 323 may select the BPF signal outputted from the first BPF 321.

On the other hand, a gain characteristic of the second BPF 322 is set to be high in the band whose frequency is less than f2. In other words, a passband having the frequency f2 as an upper limit is set. Thus, at the higher flow velocities in which the upper limit of the appropriate measurement band is f2, the selection unit 323 may select the BPF signal outputted from the second BPF 322.

According to the aforementioned configuration, a BPF characteristic before the A/D conversion is changed in response to the measurement band command from the CPU 160, and thus, a signal band before the A/D conversion is optimized in response to the flow velocity to be measured. Therefore, the S/N ratio improves, and measurement accuracy of the flow velocity improves.

Moreover, in the example, at the lower flow velocities in which the band to be measured is narrow, the clock generation unit 360 sets a high frequency division ratio of a reference clock (not illustrated) so as to set a low sampling frequency of the A/D conversion. On the other hand, since the band to be measured is broad at the higher flow velocities, and thus, the clock generation unit 360 sets a low frequency division ratio of the reference clock so as to set a high sampling frequency of the A/D conversion.

As described above, if the sampling frequency of the A/D conversion is changed according to the measurement band, it is possible to increase frequency resolution without increasing the number of FFT points at the lower flow velocities, and to perform more accurate measurement. Moreover, the sampling frequency can be set high at the higher flow velocities, and it is thus possible to expand the measurement band and to perform more accurate measurement. It is also possible to increase the number of FFT points to increase the frequency resolution at the lower flow velocities, and to reduce the number of FFT points to avoid the saturation of a processing time at the higher flow velocities.

As explained above, according to the flow velocity detecting apparatus in the second example, as in the first example, the velocity of the fluid is arithmetically operated in the appropriate frequency range that takes into account the influence by the noise. It is therefore possible to accurately detect the flow velocity.

<Third Example>

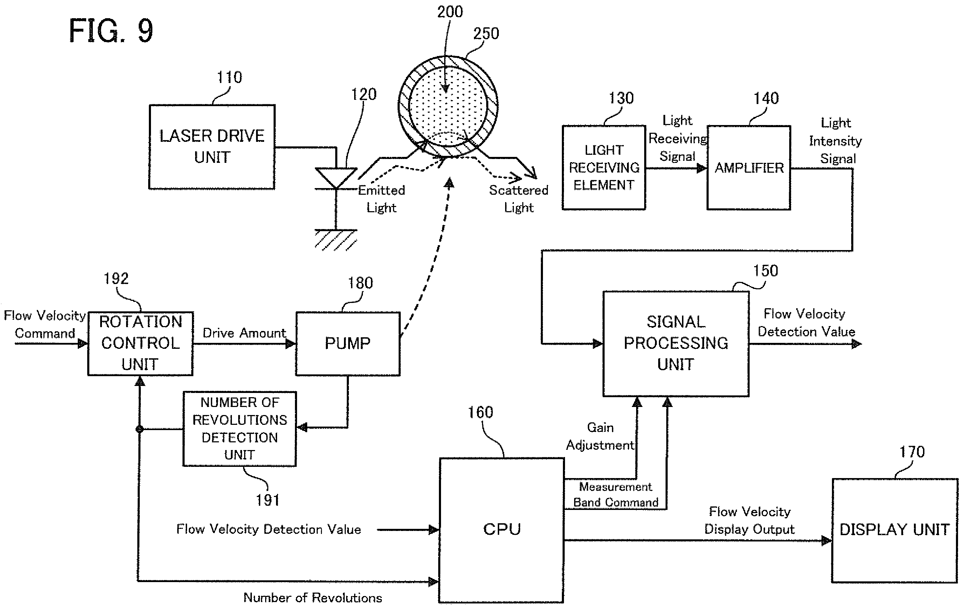

Next, a flow velocity detecting apparatus according to a third example will be explained with reference to FIG. 9. The third example has a partially different configuration and operation, in comparison with the first and second examples described above, and is mostly the same as the first and second examples. Thus, hereinafter, the different part from the first and second examples will be explained in detail, and an explanation of the same part will be omitted, as occasion demands.

<Entire Configuration>

Firstly, an entire configuration of the flow velocity detecting apparatus according to the third example will be explained with reference to FIG. 9. FIG. 9 is a block diagram illustrating the entire configuration of the flow velocity detecting apparatus according to the third example.

In FIG. 9, the flow velocity detecting apparatus according to the third example is provided with a laser drive unit 110, a semiconductor laser 120, a light receiving element 130, an amplifier 140, a signal processing unit 150, a CPU 160, a display unit 170, a pump 180, a number-of-revolutions detection unit 191, and a rotation control unit 192. In other words, the flow velocity detecting apparatus according to the third example is provided with the number-of-revolutions detection unit 191 and the rotation control unit 192, in addition to the flow velocity detecting apparatus according to the first example (refer to FIG. 1).

The number-of-revolutions detection unit 191 is one specific example of the "the number-of-re volutions detecting device", detects the number of revolutions of the pump 180, and outputs it to each of the rotation control unit 192 and the CPU 160.

The rotation control unit 192 compares a reference number of revolutions corresponding to the flow velocity command from the exterior and the number of revolutions detected by the number-of-revolutions detection unit 191, and negatively feeds back a drive amount to the pump 180, thereby controlling the number of revolutions of the pump 180.

<Operation in Arithmetic Operation of Flow Velocity>

Next, an operation in the arithmetic operation of the flow velocity on the flow velocity detecting apparatus according to the third example will be explained with reference to FIG. 9 again.

In the arithmetic operation of the flow velocity, on the CPU 160 of the flow velocity detecting apparatus according to the third example, the measurement band is set according to the number of revolutions of the pump detected by the number-of-revolutions detection unit 191, and the measurement band command is transmitted to the signal processing unit 150. Specifically, the velocity of the fluid 200 is estimated from the number of revolutions of the pump detected, and the measurement band is set on the basis of the estimated flow velocity value. In other words, in the third example, unlike the first and second examples, the measurement band is not directly set on the basis of the flow velocity command, but the measurement band is set on the basis of the estimated value of the flow velocity obtained from the actual drive amount of the pump 180.

If the measurement band is set as described above, a more appropriate measurement band can be set in comparison with a case where the measurement band is set on the basis of the flow velocity command as in the first and second examples. Specifically, since the flow velocity is estimated according to the drive amount actually realized in the pump 180, the measurement band can be preferably determined, for example, even if there is a difference between the flow velocity command and the actual drive amount.

As explained above, according to the flow velocity detecting apparatus in the third example, the measurement band is determined according to the drive amount of the driving device that makes the fluid 200 flow, and thus, the flow velocity is arithmetically operated in a more appropriate frequency range. It is therefore possible to accurately detect the flow velocity.

<Fourth Example>

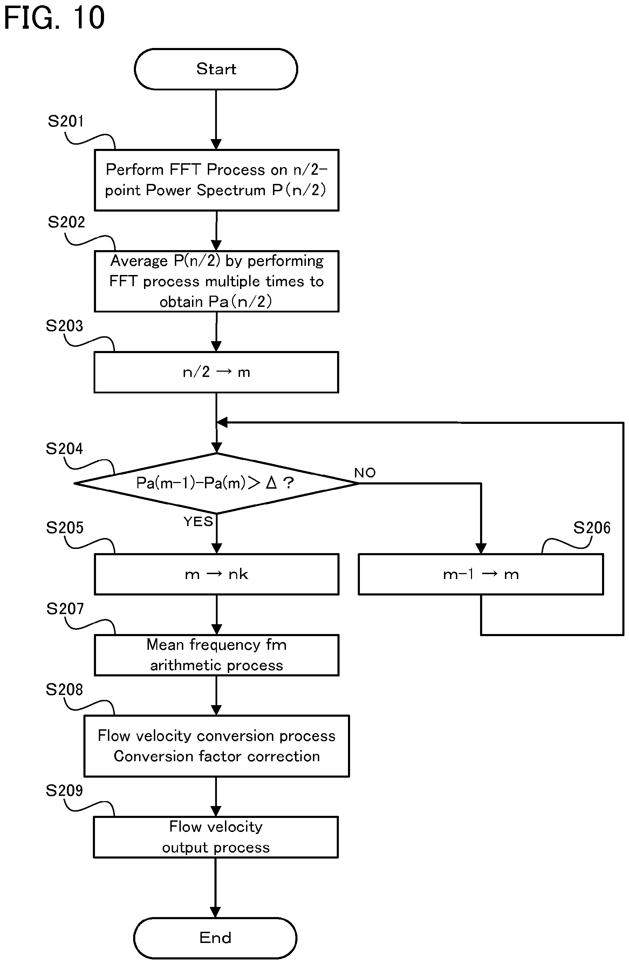

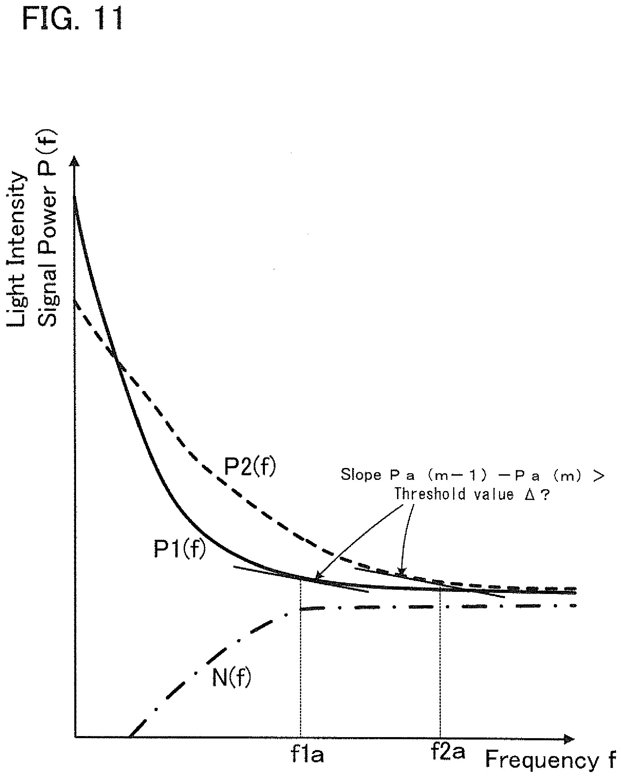

Next, a flow velocity detecting apparatus according to a fourth example will be explained with reference to FIG. 10 and FIG. 11. The fourth example has a partially different configuration and operation, in comparison with the first to third examples described above, and is mostly the same as the first to third examples. Thus, hereinafter, the different part from the first to third examples will be explained in detail, and an explanation of the same part will be omitted, as occasion demands.

<Flow Velocity Arithmetic Process>

In FIG. 10, on the flow velocity detecting apparatus according to the fourth example, the same process as the process illustrated in FIG. 5 in the first example (i.e. the step S101 to the step S103) is performed until a point at which an n/2-point power spectrum P(n/2) is obtained by performing an n-point FFT process (step S201).

If the power spectrum P(n/2) is obtained, an average power Pa(n/2) is obtained by performing the FFT process multiple times (step S202).

Then, a frequency maximum value n/2 is initialized as a pointer m (step S203). Then, Pa(m-1)-Pa(m) is arithmetically operated, and it is determined whether Pa(m-1)-Pa(m) is greater than a reference value $\Delta$ (step S204). If Pa(m-1)-Pa(m) is greater than the reference value $\Delta$ (the step S204: YES), the pointer m is stored in nk (step S205). In other words, the present pointer m is determined to be a value corresponding to an upper limit value of the measurement band. On the other hand, if Pa(m-1)-Pa(m) is not greater than the reference value $\Delta$ (the step S204: NO), a pointer m-1 is reset as the pointer m (step S206), and the process in the step S204 is performed again. In other words, the process in the step S204 is repeatedly performed until Pa(m-1)-Pa(m) becomes greater than the reference value $\Delta$.

In FIG. 11, Pa(m-1)-Pa(m) corresponds to a slope of the power spectrum of the light intensity signal. As is clear from the drawing, the slope of the light intensity signal corresponds to a noise influence rate, and if the slope of the power spectrum is greater than a certain value, it can be considered that the influence by the noise is small. The reference value $\Delta$ is a threshold value set for determining the noise influence rate as described above. By comparing the slope of the power spectrum, Pa(m-1)-Pa(m), and the reference value $\Delta$, it is possible to determine whether or not the influence by the noise is sufficiently small (i.e. whether or not the slope is to be used for the arithmetic operation of the flow velocity).

In the example in FIG. 11, a frequency f1a at which the slope of the power spectrum P1(f) at relatively lower velocities becomes greater than $\Delta$ is determined to be the upper limit of the arithmetic range. In the same manner, a frequency f2a at which the slope of the power spectrum P2(f) at relatively higher velocities becomes greater than $\Delta$ is determined to be the upper limit of the arithmetic range. As described above, in the fourth example, even if the flow velocity command in the first example or a parameter such as the number of revolutions of the pump 180 in the third example is not obtained, the measurement band can be determined by internal processing.

Back in FIG. 10, if the storage of nk is ended, the mean frequency fm is arithmetically operated as in the first example (i.e. the step S107 in FIG. 5) (step S207). The fourth example, however, is different from the other examples in that the averaged power spectrum Pa(k) is used for the arithmetic operation. Specifically, the mean frequency fm is obtained by the following equation (4).

$$Fm = \Sigma k \cdot Pa(k)/\Sigma Pa(k) \cdot \cdot \cdot (4)$$

If the mean frequency fm is arithmetically operated, a flow velocity conversion process is performed (step S208). The flow velocity conversion process is substantially the same as that in the first example (i.e. the step S108 in FIG. 5), but in the fourth example, the conversion factor is corrected according to a value of the frequency range nk. Specifically, if the value of the frequency range nk is large, the flow velocity is determined to be high, and the conversion factor corresponding to the high flow velocity is used. In the same manner, if the value of the frequency range nk is small, the flow velocity is determined to be low, and the conversion factor corresponding to the low flow velocity is used. More specifically, a conversion factor table in which the frequency range nk is a table address is read out, and the conversion factor for obtaining the flow velocity from the mean frequency fm is obtained, thereby to perform the flow velocity conversion process. The conversion factor table may be calibrated by experiments or the like in advance.

If the flow velocity is obtained, a flow velocity value is converted to a signal corresponding to the display unit 170 and is outputted (step S209). By this, a series of processes on the flow velocity detecting apparatus is ended.

As explained above, according to the flow velocity detecting apparatus in the fourth example, the slope of the average power spectrum Pa is detected, and the frequency range used for the arithmetic operation of the flow velocity can be automatically limited. It is thus possible to perform stable flow velocity measurement in a broad flow velocity range.

Description of Reference Numerals

| | |
|---|---|
| 110 | laser drive unit |
| 120 | semiconductor laser |
| 130 | light receiving element |
| 131 | first light receiving element |
| 132 | second light receiving element |
| 140 | amplifier |
| 141 | current / voltage converter |
| 142 | subtraction unit |
| 150 | signal processing unit |
| 160 | CPU |
| 170 | display unit |

180    pump
191    number-of-revolutions detection unit
192    rotation control unit
200    fluid
250    transparent tube
310    variable amplifier
320    BPF
321    first BPF
322    second BPF
323    selection unit
330    A/D converter
340    FFT unit
350    arithmetic operator
360    clock generation unit

**Claims**

1.  A flow velocity detecting apparatus comprising:

    an irradiating device (120) configured to irradiate a fluid passage (250) and a fluid (200) that flows in the fluid passage with measuring light;
    a light receiving device (130) configured to receive interference light of the measuring light scattered by the fluid passage and the measuring light scattered by the fluid;
    an obtaining device (160) configured to obtain an estimated value of the velocity of the fluid to be detected; and
    an outputting device (150) configured to perform an arithmetical operation on a signal indicating the received interference light in a usage frequency range determined based on the estimated value of the velocity of the fluid to be detected and to output a flow velocity detection value.

2.  The flow velocity detecting apparatus according to claim 1, further comprising a driving device (180) configured to perform an operation of flowing the fluid (200) in the fluid passage (250) according to the estimated value of the velocity of the fluid to be detected.

3.  The flow velocity detecting apparatus according to claim 2, wherein said obtaining device (160) performs an arithmetical operation on the estimated value of the velocity of the fluid to be detected and obtains a more appropriate estimated value of the velocity of the fluid to be detected from a drive amount of said driving device (180).

4.  The flow velocity detecting apparatus according to claim 3, wherein
    said driving device (180) has a number-of-revolutions detecting device (191) configured to detect a rotation pump and a number of revolutions of the rotation pump, and said obtaining device (160) performs the arithmetical operation on the estimated value of the velocity of the fluid to be detected and obtains the more appropriate estimated value of the velocity of the fluid to be detected on the basis of the number of revolutions detected by the number-of-revolutions detecting device (191).

5.  The flow velocity detecting apparatus according to claim 1, wherein said outputting device (150) has a FFT device (340) configured to perform fast Fourier transform on the signal indicating the received interference light.

6.  The flow velocity detecting apparatus according to claim 1, wherein said outputting device (150) has a filtering device (320) configured to allow only the usage frequency range of the signal indicating the received interference light to pass there the filtering device.

7.  The flow velocity detecting apparatus according to claim 1 or 5, wherein
    said outputting device (150) has an A/D converting device (330) configured to A/D-convert the signal indicating the received interference light, and a clock generating device (360) configured to generate a sampling clock of the A/D converting device, and the clock generating device changes frequency of the sampling clock according to the usage frequency range.

8.  The flow velocity detecting apparatus according to claim 1, wherein said light receiving device (130) includes a plurality of light receiving elements (131, 132), subtracts respective detection currents of the plurality of light receiving elements, and outputs a subtraction result as the signal indicating the received interference light.

9.  A flow velocity detecting method comprising:

    an irradiating process of irradiating a fluid passage (250) and a fluid (200) that flows in the fluid passage with measuring light;
    a light receiving process of receiving interference light of the measuring light scattered by the flow passage and the measuring light scattered by the fluid;
    an obtaining process of obtaining an estimated value of the velocity of the fluid to be detected; and
    an outputting process of performing an arithmetical operation on a signal indicating the received interference light in a usage frequency range determined based on the estimated value of the velocity of the fluid to be detected and of outputting a flow velocity detection value.

**Patentansprüche**

1. Eine Fließgeschwindigkeitsdetektionsvorrichtung, aufweisend:

   eine bestrahlende Vorrichtung (120), eingerichtet, um einen Fluiddurchgang (250) und ein Fluid (200), das in dem Fluiddurchgang fließt, mit messendem Licht zu bestrahlen;
   eine lichtempfangende Vorrichtung (130), eingerichtet, um Interferenzlicht aus dem durch den Fluiddurchgang gestreuten messenden Licht und dem durch das Fluid gestreuten messenden Licht zu empfangen;
   eine ermittelnde Vorrichtung (160), eingerichtet, um einen geschätzten Wert der zu detektierenden Geschwindigkeit des Fluids zu ermitteln; und
   eine ausgebende Vorrichtung (150), eingerichtet, um eine arithmetische Operation an einem Signal, welches das empfangene Interferenzlicht kennzeichnet, in einem Verwendungsfrequenzbereich durchzuführen, der basierend auf dem geschätzten Wert der zu detektierenden Geschwindigkeit des Fluids ermittelt wurde, und um einen Fließgeschwindigkeitsdetektionswert auszugeben.

2. Die Fließgeschwindigkeitsdetektionsvorrichtung gemäß Anspruch 1, ferner aufweisend
   eine antreibende Vorrichtung (180), eingerichtet, um einen Vorgang des Fließenlassens des Fluids (200) in dem Fluiddurchgang (250) entsprechend des geschätzten Wertes der zu detektierenden Geschwindigkeit des Fluids durchzuführen.

3. Die Fließgeschwindigkeitsdetektionsvorrichtung gemäß Anspruch 2, wobei genannte ermittelnde Vorrichtung (160) eine arithmetische Operation an dem geschätzten Wert der zu detektierenden Geschwindigkeit des Fluids durchführt und aus einem Antriebsbetrag der genannten antreibenden Vorrichtung (180) einen näherliegenden geschätzten Wert der zu detektierenden Geschwindigkeit des Fluids erhält.

4. Die Fließgeschwindigkeitsdetektionsvorrichtung gemäß Anspruch 3, wobei

   genannte antreibende Vorrichtung (180) eine Umdrehungszahl-Detektionsvorrichtung (191) aufweist, welche eingerichtet ist, um eine Rotationspumpe und eine Zahl von Umdrehungen der Rotationspumpe zu detektieren, und
   genannte ermittelnde Vorrichtung (160) die arithmetische Operation an dem geschätzten Wert der zu detektierenden Geschwindigkeit des Fluids durchführt und den näherliegenden geschätzten Wert der zu detektierenden Geschwindigkeit des Fluids erhält auf Basis der von der Umdrehungszahl-Detektionsvorrichtung (191) detektierten Anzahl von Umdrehungen.

5. Die Fließgeschwindigkeitsdetektionsvorrichtung gemäß Anspruch 1, wobei
   genannte ausgebende Vorrichtung (150) eine FFT-Vorrichtung (340) aufweist, welche eingerichtet ist, um schnelle Fourier-Transformation an dem das empfangene Interferenzlicht kennzeichnenden Signal durchzuführen.

6. Die Fließgeschwindigkeitsdetektionsvorrichtung gemäß Anspruch 1, wobei
   genannte ausgebende Vorrichtung (150) eine filternde Vorrichtung (320) aufweist, welche eingerichtet ist, um nur dem Verwendungsfrequenzbereich des das empfangene Interferenzlicht kennzeichnenden Signals zu erlauben, die filternde Vorrichtung da zu passieren.

7. Die Fließgeschwindigkeitsdetektionsvorrichtung gemäß Anspruch 1 oder 5, wobei

   genannte ausgebende Vorrichtung (150) eine A/D-wandelnde Vorrichtung (330) aufweist, welche eingerichtet ist, um das das empfangene Interferenzlicht kennzeichnende Signal A/D zu wandeln, und eine takterzeugende Vorrichtung (360) aufweist, welche eingerichtet ist, um einen Abtasttakt der A/D-wandelnden Vorrichtung zu erzeugen, und
   die takterzeugende Vorrichtung eine Frequenz des Abtasttaktes entsprechend dem Verwendungsfrequenzbereich ändert.

8. Die Fließgeschwindigkeitsdetektionsvorrichtung gemäß Anspruch 1, wobei
   genannte lichtempfangende Vorrichtung (130) eine Mehrzahl an lichtempfangenden Elementen (131, 132) aufweist, entsprechende Detektionsströme der Mehrzahl an lichtempfangenden Elemente subtrahiert, und ein Subtraktionsergebnis als das das empfangene Interferenzlicht kennzeichnende Signal ausgibt.

9. Ein Fließgeschwindigkeitsdetektionsverfahren aufweisend:

   einen bestrahlenden Prozess des Bestrahlens eines Fluiddurchgangs (250) und eines Fluids (200), das in dem Fluiddurchgang fließt, mit messendem Licht;
   einen lichtempfangenden Prozess des Empfangens von Interferenzlicht aus dem durch den Fluiddurchgang gestreuten messenden Licht und dem durch das Fluid gestreuten messenden Licht;

einen ermittelnden Prozess des Ermittelns eines geschätzten Wertes der zu detektierenden Geschwindigkeit des Fluids;

einen ausgebenden Prozess des Durchführens einer arithmetischen Operation an einem Signal, welches das empfangene Interferenzlicht kennzeichnet, in einem Verwendungsfrequenzbereich, der basierend auf dem geschätzten Wert der zu detektierenden Geschwindigkeit des Fluids ermittelt wurde, und des Ausgebens eines Fließgeschwindigkeits-Detektionswertes.

## Revendications

1. Appareil de détection d'une vitesse d'écoulement, comprenant :

un dispositif d'éclairage (120) configuré pour éclairer un passage de liquide (250) et un fluide (200) qui s'écoule dans le passage de fluide, avec une lumière de mesure ;

un dispositif de réception de la lumière (130) configuré pour recevoir une lumière d'interférence de la lumière de mesure diffusée par le passage de fluide et de la lumière de mesure diffusée par le fluide ;

un dispositif d'obtention (160) configuré pour obtenir une valeur estimée de la vitesse du fluide à détecter ; et

un dispositif de sortie (150) configuré pour exécuter une opération arithmétique sur un signal indiquant la lumière d'interférence reçue dans une plage de fréquences d'utilisation déterminée sur la base de la valeur estimée de la vitesse du fluide à détecter, et pour délivrer en sortie une valeur de détection de la vitesse d'écoulement.

2. Appareil de détection d'une vitesse d'écoulement selon la revendication 1, comprenant en outre un dispositif d'entraînement (180) configuré pour exécuter une opération d'écoulement du fluide (200) dans le passage de fluide (250) selon la valeur estimée de la vitesse du fluide à détecter.

3. Appareil de détection d'une vitesse d'écoulement selon la revendication 2, où ledit dispositif d'obtention (160) exécute une opération arithmétique sur la valeur estimée de la vitesse du fluide à détecter, et permet d'obtenir une valeur estimée plus appropriée de la vitesse du fluide à détecter à partir d'une quantité d'entraînement dudit dispositif d'entraînement (180).

4. Appareil de détection d'une vitesse d'écoulement selon la revendication 3, où

ledit dispositif d'entraînement (180) présente un dispositif de détection du nombre de tours (191) configuré pour détecter une pompe rotative et un nombre de tours de la pompe rotative, et

ledit dispositif d'obtention (160) exécute l'opération arithmétique sur la valeur estimée de la vitesse du fluide à détecter, et permet d'obtenir la valeur estimée plus appropriée de la vitesse du fluide à détecter, sur la base du nombre de tours que détecte le dispositif de détection du nombre de tours (191).

5. Appareil de détection d'une vitesse d'écoulement selon la revendication 1, où ledit dispositif de sortie (150) présente un dispositif de FFT (340) configuré pour exécuter une transformée de Fourier rapide sur le signal indiquant la lumière d'interférence reçue.

6. Appareil de détection d'une vitesse d'écoulement selon la revendication 1, où ledit dispositif de sortie (150) présente un dispositif de filtrage (320) configuré pour permettre seulement le passage, dans le dispositif de filtrage, de la plage de fréquences d'utilisation du signal indiquant la lumière d'interférence reçue.

7. Appareil de détection d'une vitesse d'écoulement selon la revendication 1 ou 5, où

ledit dispositif de sortie (150) présente un dispositif de conversion A/D (330) configuré pour convertir d'analogique en numérique le signal indiquant la lumière d'interférence reçue, et un dispositif de génération d'horloge (360) configuré pour générer une horloge d'échantillonnage du dispositif de conversion A/D, et

le dispositif de génération d'horloge modifie la fréquence de l'horloge d'échantillonnage selon la plage de fréquences d'utilisation.

8. Appareil de détection d'une vitesse d'écoulement selon la revendication 1, où ledit dispositif de réception de la lumière (130) comprend une pluralité d'éléments de réception de la lumière (131, 132), soustrait les courants de détection respectifs de la pluralité d'éléments de réception de la lumière, et délivre en sortie un résultat de soustraction en tant que signal indiquant la lumière d'interférence reçue.

9. Procédé de détection d'une vitesse d'écoulement, comprenant :

un processus d'éclairage consistant à éclairer un passage de liquide (250) et un fluide (200) qui s'écoule dans le passage de fluide, avec une lumière de mesure ;

un processus de réception de la lumière consistant à recevoir une lumière d'interférence de la lumière de mesure diffusée par le passage de fluide et de la lumière de mesure diffusée par le fluide ;

un processus d'obtention consistant à obtenir une valeur estimée de la vitesse du fluide à détecter ; et

un processus de sortie consistant à exécuter une opération arithmétique sur un signal indiquant la lumière d'interférence reçue dans une plage de fréquence d'utilisation déterminée sur la base de la valeur estimée de la vitesse du fluide à détecter, et à délivrer en sortie une valeur de détection de la vitesse d'écoulement.

# FIG. 1

EP 3 045 876 B1

# FIG. 2

FIG. 3

FIG. 4

# FIG. 5

S101 — A/D Data updated? — NO

YES

S102 — Capture A/D Data

S103 — Perform FFT process on n/2-point power spectrum P(n/2)

S104 — Is measurement band broadband? — YES

NO

S105 — n1 → nk

S106 — n2 → nk

S107 — Mean frequency fm arithmetic process

S108 — Flow velocity conversion process

S109 — Flow velocity output process

End

FIG. 6

FIG. 7

FIG. 8

FIG. 9

# FIG. 10

```
                        ┌─────────────┐
                        │    Start     │
                        └─────────────┘
                               │
                               ▼
S201   ┌──────────────────────────────────────┐
       │ Perform FFT Process on n/2−            │
       │ point Power Spectrum P(n/2)            │
       └──────────────────────────────────────┘
                               │
                               ▼
S202   ┌──────────────────────────────────────┐
       │ Average P(n/2) by performing          │
       │ FFT process multiple times to         │
       │ obtain Pa(n/2)                         │
       └──────────────────────────────────────┘
                               │
                               ▼
S203   ┌──────────────────────────────────────┐
       │              n/2 → m                   │
       └──────────────────────────────────────┘
                               │
                               ▼
S204          ◇ Pa(m−1)−Pa(m) > Δ ? ◇ ──NO──┐
                               │              │
                            YES│              ▼
                               ▼        S206 ┌──────────────┐
S205   ┌──────────────────┐                  │   m−1 → m     │
       │      m → nk        │                 └──────────────┘
       └──────────────────┘
                               │
                               ▼
S207   ┌──────────────────────────────────────┐
       │ Mean frequency fm                      │
       │ arithmetic process                     │
       └──────────────────────────────────────┘
                               │
                               ▼
S208   ┌──────────────────────────────────────┐
       │ Flow velocity conversion process       │
       │ Conversion factor correction           │
       └──────────────────────────────────────┘
                               │
                               ▼
S209   ┌──────────────────────────────────────┐
       │ Flow velocity                          │
       │ output process                         │
       └──────────────────────────────────────┘
                               │
                               ▼
                        ┌─────────────┐
                        │     End      │
                        └─────────────┘
```

# FIG. 11

Slope P a (m－1) －P a (m) ＞
Threshold value Δ ?

P2(f)

P1(f)

N(f)

f1a    f2a    Frequency f

Light Intensity
Signal Power P(f)

**EP 3 045 876 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012520720 W
- JP 2007292668 A
- JP 2010522581 W
- US 3825346 A